# EUROPEAN PATENT SPECIFICATION

(11) **EP 4 335 746 B1**
(45) Date of publication and mention of the grant of the patent: **29.10.2025**
(21) Application number: 23195071.8
(22) Date of filing: 04.09.2023
(51) Int. Cl.: B64D 11/06, B60N 3/00, B60N 3/10

(54) **SYSTEM INCLUDING STOWABLE CUPHOLDER APPARATUS**
SYSTEM MIT VERSTAUBARER BECHERHALTEVORRICHTUNG
SYSTÈME COMPRENANT UN APPAREIL PORTE-GOBELET ESCAMOTABLE

(30) Priority: 07.09.2022 IN 202241051084; 20.06.2023 US 202318211830
(43) Date of publication of application: 13.03.2024
(73) Proprietor: B/E Aerospace, Inc., Winston-Salem, NC 27105 (US)
(72) Inventor: BUSAJI, Praveen Kumar, 500006 Hyderabad (IN); KODATI, Sambasiva Rao, Vinjaram (IN); GUDLA, Chandra Sekhar, Hyderabad (IN)
(74) Representative: Dehns

(56) References cited:
- KR-A- 20190 109 101
- US-A- 4 733 908
- US-A1- 2014 034 697

## Description

### CROSS-REFERENCE TO RELATED APPLICATIONS

The present application is related to and claims priority from: Indian Application Serial Number 202241051084, titled SYSTEM INCLUDING STOWABLE CUPHOLDER APPARATUS, filed September 07, 2022.

### BACKGROUND

Currently, for many airline passengers, the only cupholder available is a cup recess on their meal tray. Drinks are frequently spilled while the meal tray is in use because drinks can be easily bumped out of the meal tray cup recess. Additionally, the cup recess takes up valuable surface area on the meal tray. US 4 733 908 relates to a beverage container holder.

### SUMMARY

In one aspect, embodiments of the inventive concepts disclosed herein are directed to a system, as claimed in claim 1. The system includes a stowable cupholder apparatus. The stowable cupholder apparatus includes a cupholder member comprising:
a top planar member, the top planar member having a cup hole configured to accommodate a cup; a rear planar member extending from the top planar member; and a base planar member extending from the rear planar member, wherein a gap exists between the top planar member and the base planar member. The stowable cupholder apparatus includes a cup grip ring member attached to the top planar member, the cup grip ring member including a ring and cup grip fingers extending inwardly away from the ring. The stowable cupholder apparatus includes a hinge attached to the rear planar member and configured to attach to a structure, wherein the hinge has a range of motion configured to move the cupholder member between a stowed position and a deployed position. The cupholder member is composed of a single piece of metal or plastic.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a system including a seat having a stowable cupholder apparatus according to the inventive concepts disclosed herein.
FIG. 2 is a view of the stowable cupholder apparatus of FIG. 1 according to the inventive concepts disclosed herein.
FIG. 3 is a view of an exemplary embodiment of a seat having the stowable cupholder apparatus of FIG. 1 according to the inventive concepts disclosed herein.
FIG. 4 is a view of an exemplary embodiment of a seat having the stowable cupholder apparatus of FIG. 1 according to the inventive concepts disclosed herein.
FIG. 5 is an exploded view of the stowable cupholder apparatus of FIG. 1 according to the inventive concepts disclosed herein.
FIG. 6 is a view of an exemplary embodiment of a seat having the stowable cupholder apparatus of FIG. 1 according to the inventive concepts disclosed herein.
FIG. 7 is a view of an exemplary embodiment of a seat having the stowable cupholder apparatus of FIG. 1 according to the inventive concepts disclosed herein.
FIG. 8 is a view of an exemplary embodiment of a seat having the stowable cupholder apparatus of FIG. 1 according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment.

Broadly, embodiments of the inventive concepts disclosed herein are directed to a system including a stowable cupholder apparatus. The system may be a non-vehicular system or may include a vehicle (e.g., aircraft, watercraft, automobile, train, etc.). The stowable cupholder apparatus may be used in any suitable environment.

In some embodiments, a stowable cupholder apparatus may be used installed on a vehicle seatback (e.g., an aircraft seatback). For example, the stowable cupholder apparatus may be installed below a display and above the meal tray; however, the stowable cupholder apparatus may be installed on any suitable location of the seatback. In some embodiments, the stowable cupholder apparatus may hold any size cup or drink. The stowable cupholder apparatus may avoid spillage by providing additional support. In some embodiments, the stowable cupholder apparatus may be used as an apparel holder (e.g., a coat hook), a mobile electronic device holder (e.g., a mobile phone holder or a tablet device holder), or as stowage for an item (e.g., a wallet and/or a passport). In some embodiments, passengers can utilize the stowable cupholder apparatus with any of various suitable sizes of drinks to avoid spillage during flight. Additionally, the passenger may place their mobile phone and hang their coat on the stowable cupholder apparatus, which allows object storage to consume less usable space in the cabin as compared to deploying the meal tray to use a cupholder. In some embodiments, the stowable cupholder apparatus may improve passenger convenience. In some embodiments, the stowable cupholder apparatus may be easy to install, deploy, replace, and/or repair and may be cost effective due to the stowable cupholder apparatus' design with multiple use cases. In some embodiments, the stowable cupholder apparatus may be a motorized stowable cupholder apparatus such that the stowable cupholder apparatus may move between a stowed and deployed position via operation of a motor and/or actuator.

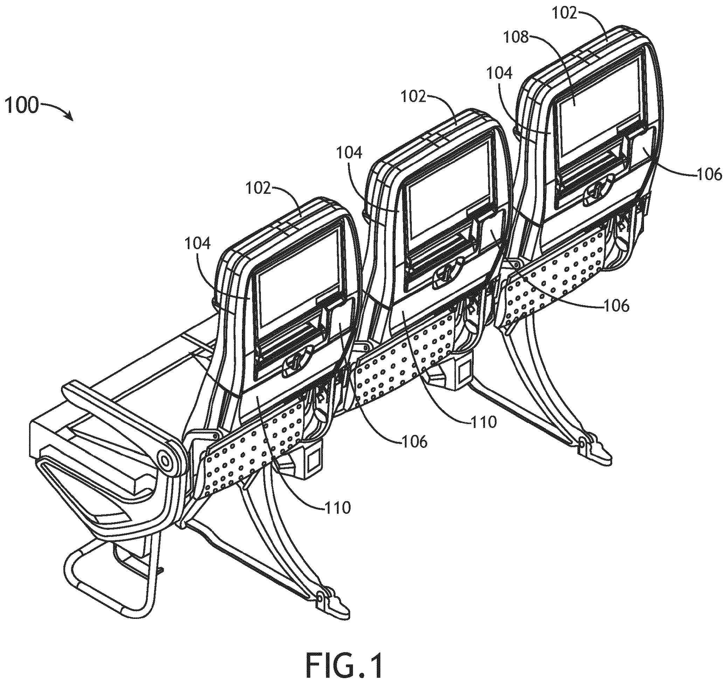

Referring now to FIG. 1, an exemplary embodiment of a system including a vehicle (e.g., aircraft 100, watercraft, automobile, train, etc.) including at least one seat (e.g., an aircraft seat 102) are depicted according to the inventive concepts. For example, the seat 102 may have a seatback 104. The seatback 104 may include a display 108 and a meal tray 110. The system may include at least one stowable cupholder apparatus 106 (e.g., which is shown in a stowed position), which, for example, may be installed on the seatback (e.g., a vehicle seatback (e.g., an aircraft seatback 104)) of the seat (e.g., a vehicle seat (e.g., an aircraft seat 102)) or a monument (e.g., an aircraft monument (e.g., an aircraft galley monument)). The stowable cupholder apparatus 106 may be installed at any suitable location in any suitable vehicle, or in any other suitable environment. In some embodiments, the system may include multiple stowable cupholder apparati 106.

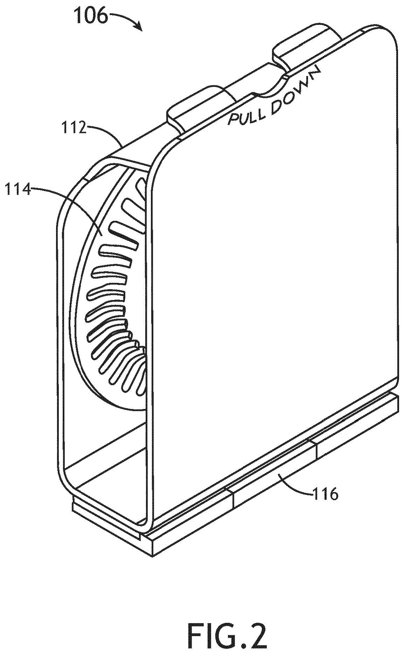

Referring now to FIG. 2, an exemplary embodiment of the stowable cupholder apparatus 106 is shown. The stowable cupholder apparatus 106 may include a cupholder member 112, a cup grip ring member 114, and a hinge 116 (e.g., a piano hinge, which is shown in a stowed position).

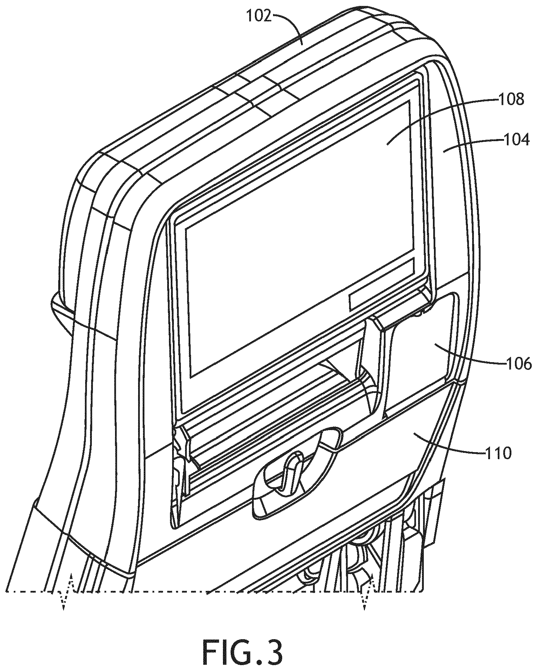

Referring now to FIG. 3, an exemplary embodiment of the seatback 104 including the stowable cupholder apparatus 106, with the stowable cupholder apparatus 106 in the stowed position, is shown.

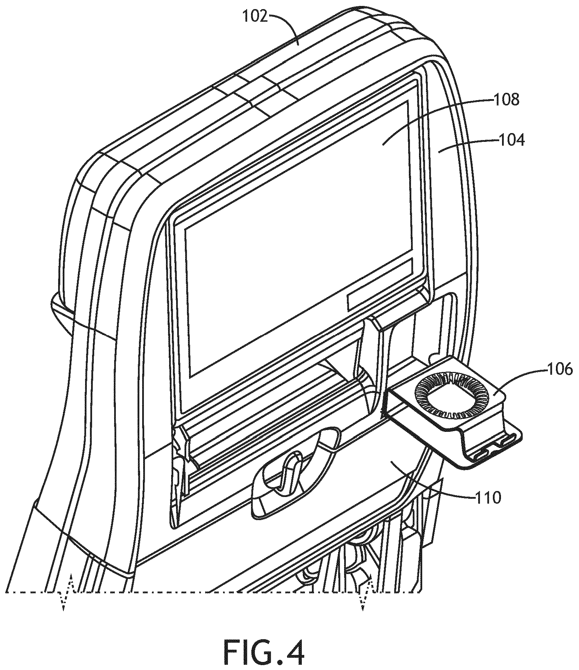

Referring now to FIG. 4, an exemplary embodiment of the seatback 104 including the stowable cupholder apparatus 106, with the stowable cupholder apparatus 106 in the deployed position, is shown.

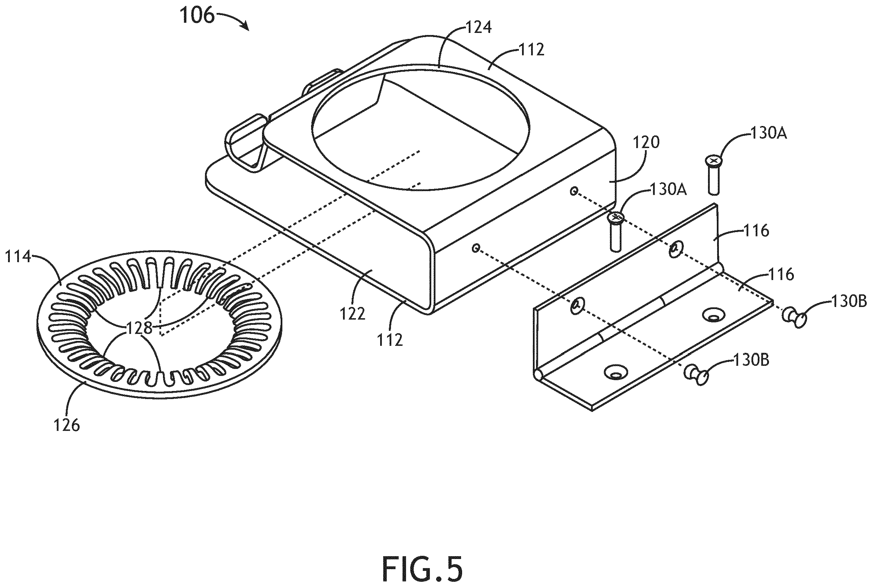

Referring now to FIG. 5, an exploded view of an exemplary embodiment of the stowable cupholder apparatus 106 is shown. The stowable cupholder apparatus 106 includes the cupholder member 112, the cup grip ring member 114, and the hinge 116.

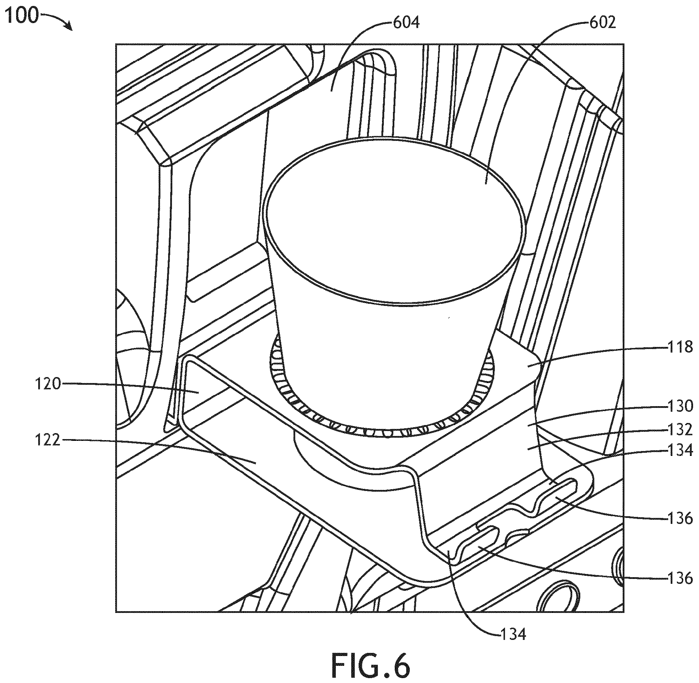

The cupholder member 112 comprises: a top planar member 118, a rear planar member 120, a base planar member 122, and/or an accessory holder member 130 (e.g., as better viewed in FIG. 6). The cupholder member 112 is composed of any suitable material(s), such as metal, plastic (e.g., a single piece of plastic), and/or carbon fiber.

The top planar member 118 has a cup hole 124 (e.g., a circular cup hole) configured to accommodate a drink or a cup (e.g., 602 as shown in FIG. 6). The top planar member 118 may be above and parallel to the base planar member 122, and a gap exists between the top planar member 118 and the base planar member 122.

The rear planar member 120 extends from the top planar member 118, such as at a right angle.

The base planar member 122 extends from the rear planar member, such as at a right angle.

The cup grip ring member 114 is attached to the top planar member 118. The cup grip ring member 114 includes a ring 126 and cup grip fingers 128 extending inwardly away from the ring 126. The cup grip fingers 128 may taper and/or curve downward toward tips of the cup grip fingers 128. In some embodiments, the cup grip ring member 114, the cup grip ring member 114 may be composed of any suitable material(s), such as silicone rubber.

The hinge 116 is attached to the rear planar member (e.g., with first attachment means (e.g., rivets 130B, which may have countersunk heads)) and configured to attach to a structure (e.g., a galley monument or a seatback 104) (e.g., with a second attachment means (e.g., screws 130A, which may have countersunk heads)). In some embodiments, the hinge 116 is a piano hinge, which for example, may support multiple pounds of load (e.g., 4 or more pounds) and may have an 0-degree to 90-degree (e.g., 90-degree) range of motion. The hinge 116 has a range of motion configured to move the cupholder member 112 between a stowed position and a deployed position.

Referring now to FIG. 6, an exemplary embodiment of the stowable cupholder apparatus 106 in a deployed position holding a cup 602 is shown.

The accessory holder member 130 the accessory holder member may extend from the top planar member 118.

The accessory holder member 130 may be defined by: a planar accessory holder 132 member extending in a direction at least toward the base planar member 122, such as toward the base planar member 122 and away from the rear planar member 120; at least one (e.g., two) ledge member 134 extending from the planar accessory holder 132 in a direction at least away from the rear planar member 120; and/or at least one (e.g., two) lip member 136, each of the at least one lip member extending from one of the at least one ledge member 134 in a direction at least away from the base planar member 122.

In some embodiments, the at least one ledge member 134 includes two ledge members 134, wherein the accessory holder member 130 is further defined by a notch between the two ledge members 134, wherein the at least one lip member 136 includes two lip members 136.

In some embodiments, each of the at least one lip member 136 extends from one of the at least one ledge member 134 in a direction perpendicular to the base planar member 122.

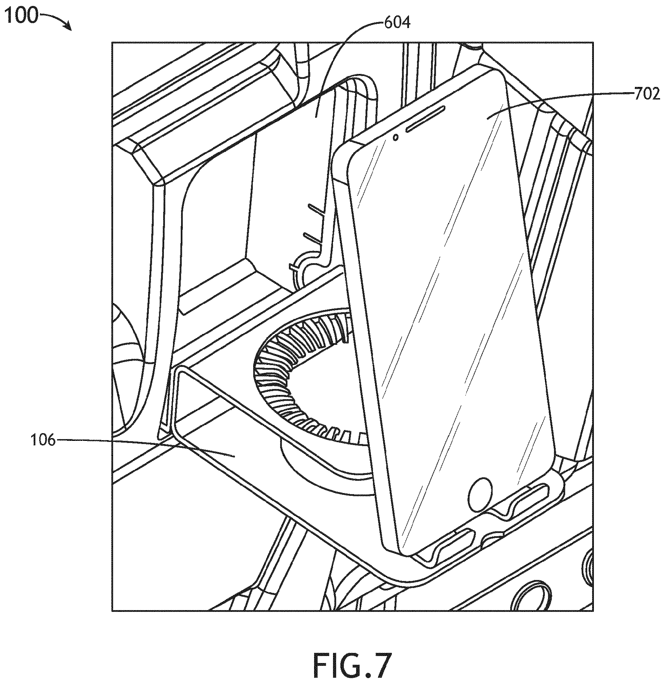

In some embodiments, the accessory holder member 130 acts as a mobile electronic device stand configured to prop up the mobile electronic device (e.g., 702 in FIG. 7) for a passenger to view the mobile electronic device (e.g., 702).

In some embodiments, the accessory holder member 130 acts as an apparel hook (e.g., a coat hook).

Referring now to FIG. 7, an exemplary embodiment of the stowable cupholder apparatus 106 holding a mobile electronic device 702 is shown.

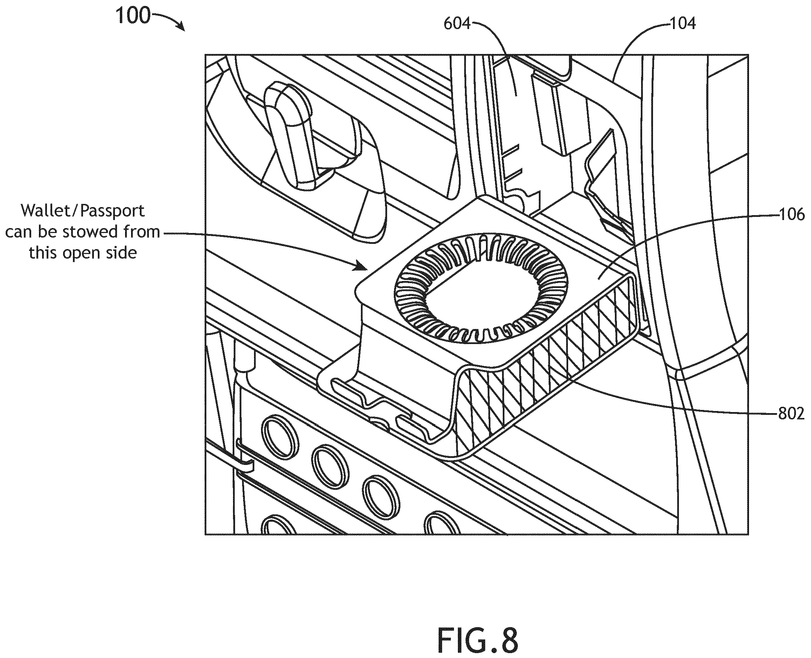

Referring now to FIG. 8, an exemplary embodiment of the stowable cupholder apparatus 106 in a deployed position is shown.

In some embodiments, the stowable cupholder apparatus 106 may further include mesh 802 attached to the top planar member 118 and the base planar member 122. The mesh 802 may extending between the top planar member 118 and the base planar member 122. An item storage area may be defined by a side opening, the mesh 802, the top planar member 118, the base planar member 122, the rear planar member 120, and the planar accessory holder member 130. The item storage area may be configured to hold any suitable passenger items, such as a wallet or a passport.

In some embodiments, the stowable cupholder apparatus 106 may be installed on the aircraft seatback 104 such that the stowable cupholder apparatus 106 is vertically positioned between a display 108 and a meal tray 110 when the meal tray 110 is in a stowed position. For example, the stowable cupholder apparatus 106 may be installed in a horizontally off-centered position on the aircraft seatback 104.

In some embodiments, the stowable cupholder apparatus 106 may be installed on the aircraft seatback 104 such that the stowable cupholder apparatus 106 is vertically positioned above a meal tray 110 when the meal tray 110 is in a stowed position.

In some embodiments, the stowable cupholder apparatus 106 may be installed in a horizontally off-centered position on the aircraft seatback 104.

As will be appreciated from the above, embodiments of the inventive concepts disclosed herein are directed to a system including a stowable cupholder apparatus.

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

From the above description, it is clear that the inventive concepts disclosed herein are well adapted to carry out the objects and to attain the advantages mentioned herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system, comprising:
a stowable cupholder apparatus (106), comprising:
a cupholder member (112) comprising:
a top planar member (118), the top planar member having a cup hole (124) configured to accommodate a cup (602);
a rear planar member (120) extending from the top planar member (118); and
a base planar member (122) extending from the rear planar member (120), wherein a gap exists between the top planar member (118) and the base planar member (122);
a cup grip ring member (114) attached to the top planar member (118), the cup grip ring member (114) comprising a ring (126); and
a hinge (116) attached to the rear planar member (120) and configured to attach to a structure, wherein the hinge (116) has a range of motion configured to move the cupholder member (112) between a stowed position and a deployed position;
**characterized in that** the cup grip ring member (114) comprises cup grip fingers (128) extending inwardly away from the ring (126); and **in that** the cupholder member (112) is composed of a single piece of metal or plastic.

2. The system of claim 1, wherein the cup grip ring member (114) is composed at least of silicone rubber.

3. The system of claim 1 or 2, wherein the cupholder member (112) is further defined by an accessory holder member (130) extending from the top planar member (118), the accessory holder member (130) comprising:
a planar accessory holder member (132) extending in a direction at least toward the base planar member (122);
at least one ledge member (134) extending from the planar accessory holder (132) in a direction at least away from the rear planar member (120); and
at least one lip member (136), each of the at least one lip member extending from one of the at least one ledge member (134) in a direction at least away from the base planar member (122).

4. The system of claim 3, wherein the at least one ledge member (134) comprises two ledge members, wherein the accessory holder member (130) further comprises a notch between the two ledge members, wherein the at least one lip member (136) comprises two lip members.

5. The system of claim 3 or 4, wherein the planar accessory holder member (132) extends toward the base planar member (122) and away from the rear planar member (120).

6. The system of any of claims 3-5, wherein each of the at least one lip member (136) extends from one of the at least one ledge member (134) in a direction perpendicular to the base planar member (122).

7. The system of any of claims 3-6, wherein the stowable cupholder apparatus further comprises mesh (802) attached to the top planar member (118) and the base planar member (122), the mesh (802) extending between the top planar member (118) and the base planar member (122), wherein an item storage area is defined by a side opening, the mesh (802), the top planar member (118), the base planar member (122), the rear planar member (120), and the planar accessory holder member (130).

8. The system of any of claims 3-7, wherein the accessory holder member (130) acts as a mobile electronic device stand configured to prop up the mobile electronic device for a passenger to view the mobile electronic device; and/or
wherein the accessory holder member (130) acts as an apparel hook.

9. The system of any preceding claim, wherein the top planar member (118) and the base planar member (122) are parallel, and preferably wherein the rear planar member (120) is perpendicular to the top planar member (118) and the base planar member (122).

10. The system of any preceding claim, wherein the range of motion is an 0- to 90-degree range of motion, and preferably wherein the hinge is a 90-degree piano hinge.

11. The system of any preceding claim, wherein the structure is a vehicle seatback.

12. The system of claim 11, further comprising an aircraft seat comprising the vehicle seatback comprising the stowable cupholder apparatus (106), wherein the vehicle seatback is an aircraft seatback (104), and preferably wherein the stowable cupholder apparatus (106) is installed on the aircraft seatback (104) such that the stowable cupholder apparatus (106) is vertically positioned between a display and a meal tray (110) when the meal tray is in a stowed position, and preferably wherein the stowable cupholder apparatus (106) is installed in a horizontally off-centered position on the aircraft seatback (104).

13. The system of claim 11, wherein the vehicle seatback is an aircraft seatback (104), wherein the stowable cupholder apparatus (106) is installed on the aircraft seatback (104) such that the stowable cupholder apparatus (106) is vertically positioned above a meal tray (110) when the meal tray is in a stowed position.

14. The system of claim 11, wherein the vehicle seatback is an aircraft seatback (104), wherein the stowable cupholder apparatus (106) is installed in a horizontally off-centered position on the aircraft seatback (104).

## Patentansprüche

1. System, umfassend:
eine verstaubare Becherhaltevorrichtung (106), umfassend:
ein Becherhalteelement (112), umfassend:
ein oberes ebenes Element (118), wobei das obere ebene Element ein Becherloch (124) aufweist, das dazu konfiguriert ist, einen Becher (602) aufzunehmen;
ein hinteres ebenes Element (120), das sich von dem oberen ebenen Element (118) erstreckt; und
ein ebenes Basiselement (122), das sich von dem hinteren ebenen Element (120) erstreckt, wobei zwischen dem oberen ebenen Element (118) und dem ebenen Basiselement (122) ein Spalt vorhanden ist;
ein Bechergreifringelement (114), das an dem oberen ebenen Element (118) befestigt ist, wobei das Bechergreifringelement (114) einen Ring (126) umfasst; und
ein Scharnier (116), das an dem hinteren ebenen Element (120) befestigt und dazu konfiguriert ist, an einer Konstruktion befestigt zu sein, wobei das Scharnier (116) einen Bewegungsbereich aufweist, der dazu konfiguriert ist, das Becherhalteelement (112) zwischen einer verstauten Position und einer ausgefahrenen Position zu bewegen;
**dadurch gekennzeichnet, dass** das Bechergriffringelement (114) Bechergrifffinger (128) umfasst, die sich nach innen von dem Ring (126) weg erstrecken; und dass das Becherhalteelement (112) aus einem einzelnen Stück Metall oder Kunststoff besteht.

2. System nach Anspruch 1, wobei das Bechergreifringelement (114) mindestens aus Silikonkautschuk besteht.

3. System nach Anspruch 1 oder 2, wobei das Becherhalteelement (112) ferner durch ein Zubehörhalteelement (130) definiert ist, das sich von dem oberen ebenen Element (118) erstreckt, wobei das Zubehörhalteelement (130) Folgendes umfasst:
ein ebenes Zubehörhalteelement (132), das sich in einer Richtung mindestens in Richtung des ebenen Basiselements (122) erstreckt;
mindestens ein Leistenelement (134), das sich von dem ebenen Zubehörhalter (132) in einer Richtung mindestens weg von dem hinteren ebenen Element (120) erstreckt; und
mindestens ein Lippenelement (136), wobei sich jedes des mindestens einen Lippenelements von einem des mindestens einen Leistenelements (134) in einer Richtung mindestens weg von dem ebenen Basiselement (122) erstreckt.

4. System nach Anspruch 3, wobei das mindestens eine Leistenelement (134) zwei Leistenelemente umfasst, wobei das Zubehörhalteelement (130) ferner eine Kerbe zwischen den zwei Leistenelementen umfasst, wobei das mindestens eine Lippenelement (136) zwei Lippenelemente umfasst.

5. System nach Anspruch 3 oder 4, wobei sich das ebene Zubehörhalteelement (132) in Richtung des ebenen Basiselements (122) und von dem hinteren ebenen Element (120) weg erstreckt.

6. System nach einem der Ansprüche 3-5, wobei sich jedes des mindestens einen Lippenelements (136) von einem des mindestens einen Leistenelements (134) in einer Richtung senkrecht zu dem ebenen Basiselement (122) erstreckt.

7. System nach einem der Ansprüche 3-6, wobei die verstaubare Becherhaltevorrichtung ferner ein Netz (802) umfasst, das an dem oberen ebenen Element (118) und dem unteren ebenen Element (122) befestigt ist, wobei sich das Netz (802) zwischen dem oberen ebenen Element (118) und dem ebenen Basiselement (122) erstreckt, wobei ein Aufbewahrungsbereich für Gegenstände durch eine seitliche Öffnung, das Netz (802), das obere ebene Element (118), das ebene Basiselement (122), das hintere ebene Element (120) und das ebene Zubehörhalteelement (130) definiert ist.

8. System nach einem der Ansprüche 3-7, wobei das Zubehörhalteelement (130) als Ständer für eine mobile elektronische Vorrichtung fungiert, der dazu konfiguriert ist, die mobile elektronische Vorrichtung abzustützen, damit ein Passagier die mobile elektronische Vorrichtung betrachten kann; und/oder
wobei das Zubehörhalteelement (130) als Kleiderhaken fungiert.

9. System nach einem der vorhergehenden Ansprüche, wobei das obere ebene Element (118) und das ebene Basiselement (122) parallel sind und wobei das hintere ebene Element (120) vorzugsweise senkrecht zu dem oberen ebenen Element (118) und zum ebenen Basiselement (122) ist.

10. System nach einem der vorhergehenden Ansprüche, wobei der Bewegungsbereich ein Bewegungsbereich von 0 bis 90 Grad ist und wobei das Scharnier vorzugsweise ein 90-Grad-Stangenscharnier ist.

11. System nach einem der vorhergehenden Ansprüche, wobei die Konstruktion eine Fahrzeugsitzlehne ist.

12. System nach Anspruch 11, ferner umfassend einen Flugzeugsitz, umfassend die Fahrzeugsitzlehne, welche die verstaubare Becherhaltevorrichtung (106) umfasst, wobei die Fahrzeugsitzlehne eine Flugzeugsitzlehne (104) ist und wobei die verstaubare Becherhaltevorrichtung (106) vorzugsweise derart an der Flugzeugsitzlehne (104) installiert ist, dass die verstaubare Becherhaltevorrichtung (106) vertikal zwischen einer Anzeige und einem Tablett (110) für Mahlzeiten positioniert ist, wenn sich das Tablett für Mahlzeiten in einer verstauten Position befindet, und wobei die verstaubare Becherhaltevorrichtung (106) vorzugsweise in einer horizontal außermittigen Position an der Flugzeugsitzlehne (104) installiert ist.

13. System nach Anspruch 11, wobei die Fahrzeugsitzlehne eine Flugzeugsitzlehne (104) ist, wobei die verstaubare Becherhaltevorrichtung (106) derart an der Flugzeugsitzlehne (104) installiert ist, dass die verstaubare Becherhaltevorrichtung (106) vertikal über einem Tablett (110) für Mahlzeiten positioniert ist, wenn sich das Tablett für Mahlzeiten in einer verstauten Position befindet.

14. System nach Anspruch 11, wobei die Fahrzeugsitzlehne eine Flugzeugsitzlehne (104) ist, wobei die verstaubare Becherhaltevorrichtung (106) in einer horizontal außermittigen Position an der Flugzeugsitzlehne (104) installiert ist.

## Revendications

1. Un système, comprenant :
un dispositif de porte-gobelet escamotable (106), comprenant :
un élément de porte-gobelet (112) comprenant :
un élément planaire supérieur (118), l'élément planaire supérieur présentant un trou de gobelet (124) configuré pour recevoir un gobelet (602) ;
un élément planaire arrière (120) s'étendant depuis l'élément planaire supérieur (118) ; et
un élément planaire de base (122) s'étendant depuis l'élément planaire arrière (120), dans lequel un espace existe entre l'élément planaire supérieur (118) et l'élément planaire de base (122) ;
un élément de bague de préhension de gobelet (114) fixé à l'élément planaire supérieur (118), l'élément de bague de préhension de gobelet (114) comprenant une bague (126) ; et
une charnière (116) fixée à l'élément planaire arrière (120) et configurée pour se fixer à une structure, dans laquelle la charnière (116) a une plage de mouvement configurée pour déplacer l'élément de porte-gobelet (112) entre une position escamotée et une position déployée ;
**caractérisé en ce que** l'élément de bague de préhension de gobelet (114) comprend des doigts de préhension de gobelet (128) s'étendant vers l'intérieur en s'éloignant de la bague (126) ; et **en ce que** l'élément de porte-gobelet (112) est composé d'une seule pièce de métal ou de plastique.

2. Le système selon la revendication 1, dans lequel l'élément de bague de préhension de gobelet (114) est composé au moins de caoutchouc de silicone.

3. Le système selon la revendication 1 ou 2, dans lequel l'élément de porte-gobelet (112) est en outre défini par un élément de support d'accessoire (130) s'étendant depuis l'élément planaire supérieur (118), l'élément de support d'accessoire (130) comprenant :
un élément de support d'accessoire planaire (132) s'étendant dans une direction au moins vers l'élément planaire de base (122) ;
au moins un élément de rebord (134) s'étendant depuis le support d'accessoire planaire (132) dans une direction s'éloignant au moins de l'élément planaire arrière (120) ; et
au moins un élément de lèvre (136), chacun du au moins un élément de lèvre s'étendant depuis l'un du au moins un élément de rebord (134) dans une direction s'éloignant au moins de l'élément planaire de base (122).

4. Le système selon la revendication 3, dans lequel le au moins un élément de rebord (134) comprend deux éléments de rebord, dans lequel l'élément de support d'accessoire (130) comprend en outre une encoche entre les deux éléments de rebord, dans lequel le au moins un élément de lèvre (136) comprend deux éléments de lèvre.

5. Le système selon la revendication 3 ou 4, dans lequel l'élément de support d'accessoire planaire (132) s'étend vers l'élément planaire de base (122) et en s'éloignant de l'élément planaire arrière (120).

6. Le système selon l'une quelconque des revendications 3 à 5, dans lequel chacun du au moins un élément de lèvre (136) s'étend depuis l'un du au moins un élément de rebord (134) dans une direction perpendiculaire à l'élément planaire de base (122).

7. Le système selon l'une quelconque des revendications 3 à 6, dans lequel le dispositif de porte-gobelet escamotable comprend en outre un filet (802) fixé à l'élément planaire supérieur (118) et à l'élément planaire de base (122), le filet (802) s'étendant entre l'élément planaire supérieur (118) et l'élément planaire de base (122), dans lequel une zone de rangement d'article est définie par une ouverture latérale, le filet (802), l'élément planaire supérieur (118), l'élément planaire de base (122), l'élément planaire arrière (120), et l'élément de support d'accessoire planaire (130).

8. Le système selon l'une quelconque des revendications 3 à 7, dans lequel l'élément de support d'accessoire (130) sert de support pour dispositif électronique mobile, configuré pour soutenir le dispositif électronique mobile afin qu'un passager puisse visualiser le dispositif électronique mobile ; et/ou dans lequel l'élément de support d'accessoire (130) sert de crochet à vêtement.

9. Le système selon l'une quelconque des revendications précédentes, dans lequel l'élément planaire supérieur (118) et l'élément planaire de base (122) sont parallèles, et de préférence dans lequel l'élément planaire arrière (120) est perpendiculaire à l'élément planaire supérieur (118) et à l'élément planaire de base (122).

10. Le système selon l'une quelconque des revendications précédentes, dans lequel la plage de mouvement est une plage de mouvement de 0 à 90 degrés, et de préférence dans lequel la charnière est une charnière à piano de 90 degrés.

11. Le système selon l'une quelconque des revendications précédentes, dans lequel la structure est un dossier de siège de véhicule.

12. Le système selon la revendication 11, comprenant en outre un siège d'aéronef comprenant le dossier de siège de véhicule comprenant le dispositif de porte-gobelet escamotable (106), dans lequel le dossier de siège de véhicule est un dossier de siège d'aéronef (104), et de préférence dans lequel le dispositif de porte-gobelet escamotable (106) est installé sur le dossier de siège d'aéronef (104) de telle sorte que le dispositif de porte-gobelet escamotable (106) est positionné verticalement entre un écran et une tablette-repas (110) lorsque la tablette-repas est en position escamotée, et de préférence dans lequel le dispositif de porte-gobelet escamotable (106) est installé dans une position horizontalement décentrée sur le dossier de siège d'aéronef (104).

13. Le système selon la revendication 11, dans lequel le dossier de siège de véhicule est un dossier de siège d'aéronef (104), dans lequel le dispositif de porte-gobelet escamotable (106) est installé sur le dossier de siège d'aéronef (104) de telle sorte que le dispositif de porte-gobelet escamotable (106) est positionné verticalement au-dessus d'une tablette-repas (110) lorsque la tablette-repas est en position escamotée.

14. Le système selon la revendication 11, dans lequel le dossier de siège de véhicule est un dossier de siège d'aéronef (104), dans lequel le dispositif de porte-gobelet escamotable (106) est installé dans une position horizontalement décentrée sur le dossier de siège d'aéronef (104).
